# EUROPEAN PATENT APPLICATION

(11) **EP 4 435 289 A1**
(43) Date of publication of application: **25.09.2024**
(21) Application number: 24165752.7
(22) Date of filing: 25.03.2024
(51) Int. Cl.: F16F 9/06, F16F 9/516

(54) **TRACTION GAS SHOCK ABSORBER DEVICE**

(30) Priority: 24.03.2023 IT 202300005685
(71) Applicant: Vapsint S.r.l., 31010 Godega di S. Urbano (TV) (IT)
(72) Inventor: Gava, Andrea, 31016 Cordignano (TV) (IT)
(74) Representative: Petraz, Gilberto Luigi

(57) **Abstract**

Gas shock absorber device (10) of the traction type comprising a cylindrical body (11) provided with an internal cylinder (15) in which a hermetically sealed piston (16) is axially sliding, integral with a rod (17) which acts as an actuation member between a contracted position (P1) and an extracted position (P2). A pressurized gas (G) and a shock absorber liquid (L) are present in the cylindrical body (11) which are able to generate respective flows exiting from, or entering into, the internal cylinder (15), which is provided with a valve member (22) for regulating the exit of the flow of the liquid (L).

## Description

### FIELD OF THE INVENTION

The present invention concerns a gas shock absorber device of the traction type which can, for example, be used in mechanisms for closing a door, a frame or a window, which can be sliding or hinged, for the window and door frames, furniture or automotive sectors.

### BACKGROUND OF THE INVENTION

Gas shock absorber devices, that is, ones that do not have internal mechanical springs, which exploit the compression of a gas present inside them to lift or lower an object in a cushioned manner, without using any external energy, are known.

Such shock absorber devices usually comprise a cylindrical body in which a piston is axially sliding, the piston being connected to a rod which acts as an actuation member. Inside the cylindrical body there is pressurized gas, usually pure nitrogen, and a shock absorbing liquid, for example oil.

In some shock absorber devices, the piston divides the space inside the cylindrical body into a first zone, which extends between the piston and one end of the cylindrical body, and a second zone, disposed on the opposite side of the piston with respect to the first zone.

In addition, gas shock absorber devices are known that provide an open internal cylinder, having a smaller diameter than the cylindrical body, and in which the piston is sliding. The internal cylinder defines a circumferential zone, which is outside it, which puts the first and second zone in fluidic communication for the passage of the gas and/or liquid, in relation to the movement of the piston itself.

Known gas shock absorber devices may be of the compression or traction type.

In compression gas shock absorber devices, when the piston and the rod are loaded, subjected to a force, they are in a contracted position, or closed condition, while when they are not loaded, they are in an extracted position, or open condition. Consequently, in the contracted position, the compression of the gas and/or liquid tends to take the piston and the rod outward, that is, in the extracted position.

Traction gas shock absorber devices work the opposite way, when the piston and the rod are in the contracted position they are not loaded, while when they are in an extracted position they are loaded. Consequently, in the extracted position, the compression of the gas and/or liquid tends to take the piston and the rod inward, that is, in the contracted position.

Compression gas shock absorber devices are often used for opening doors, frames, or windows and can provide inside them a system for slowing down the travel of the piston, so as to adequately cushion the passage from the contracted position to the extracted position.

Traction gas shock absorber devices are used instead of compression shock absorber devices because they are more compact and have a smaller longitudinal overall dimension. In addition, the time required for the piston and rod to move from the extracted position to the contracted position can be about half that of compression gas shock absorber devices.

However, traction gas shock absorber devices have the disadvantage that, in relation to the movement time and therefore to the speed of the piston, cavitation and/or bubbling phenomena of the gas and/or liquid present inside them can occur. These phenomena can cause inconvenient noises during the movement, such as whistling or screeching, or can also cause malfunctions of the shock absorber device itself.

There is therefore the need to perfect a traction gas shock absorber device that can overcome at least one of the disadvantages of the state of the art.

To do this it is necessary to solve the technical problem of creating a traction gas shock absorber device in which the movement of the piston occurs in a controlled, or braked, manner.

In particular, one purpose of the present invention is to provide a traction gas shock absorber device that is reliable and compact.

Another purpose of the present invention is to provide a traction gas shock absorber device which does not produce unwanted noise.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the present invention or variants to the main inventive idea.

In accordance with the above purposes and to resolve the technical problem disclosed above in a new and original way, also achieving considerable advantages compared to the state of the prior art, a gas shock absorber device of the traction type according to the present invention comprises a cylindrical body provided with an internal cylinder in which a hermetically sealed piston is axially sliding, integral with a rod which acts as an actuation member between a contracted position, in which it is disposed inside the cylindrical body, and an extracted position, in which it exits from a first end of the cylindrical body.

There are a pressurized gas and a shock absorber liquid in the cylindrical body, which are able to generate respective flows exiting from, or entering into, the internal cylinder.

In accordance with one aspect of the present invention, a valve member is associated with the internal cylinder, which is configured to close the internal cylinder and comprises means for regulating the flow of the liquid exiting from, or entering into, the internal cylinder in relation to the action of the piston, so that the rod passes from the contracted position to the extracted position with a first speed, and from the extracted position to the contracted position with a second speed, different from the first speed.

In accordance with another aspect of the present invention, the first speed is greater than the second speed.

The shock absorber device also comprises a hermetic bottom disposed on the opposite part with respect to the valve member.

In accordance with another aspect of the present invention, the valve member comprises a front wall and a lateral wall to close and externally wrap a part of the internal cylinder.

The valve member defines, in the cylindrical body, a first zone between a second end of the latter and the front wall, a second zone in the internal cylinder, and a third zone, external to the internal cylinder, which extends between the terminal surface of the lateral wall and the hermetic bottom, wherein the first and second zone are in fluidic communication by means of the regulating means.

In accordance with another aspect of the present invention, the regulating means comprise a calibrated hole configured to allow the controlled exit of the liquid from the internal cylinder when the liquid is subjected to compression by the piston, during the passage from the extracted position to the contracted position, thus regulating the second speed.

In accordance with another aspect of the present invention, the calibrated hole is made on the front wall and comprises a section narrowing so as to have a cross section close to the second zone that is smaller than the cross section that is close to the first zone, thus slowing down the exit of the liquid subjected to compression by the piston.

Doing so achieves the advantage of slowing down the passage of the rod, together with the cylinder, from the extracted position to the contracted position, preventing the disadvantages linked to cavitation and bubbling that affect the solutions of the state of the art.

In accordance with another aspect of the present invention, the regulating means comprise a discharge valve having a seating in which a closing element is disposed with clearance mobile between a closed position and an open position in relation to the condition of compression of the liquid, in order to prevent and allow, respectively, the passage of the liquid into the internal cylinder, thus regulating the first speed.

In accordance with another aspect of the present invention, the calibrated hole defines a passage section smaller than the passage section of the seating, so that the second speed is lower than the first speed.

In accordance with another aspect of the present invention, the closing element comprises a closing portion which, when the closing element is in the closed position, is configured to contact a shoulder of the seating in order to block the liquid exiting from the second zone, and a centering portion configured to cooperate with a first portion of the seating in order to keep the closing element in a centered position with respect to the seating when it is in the open position.

In accordance with another aspect of the present invention, the size of the closing portion and of the centering portion is such as to allow, when the closing element is in the open position, the controlled passage of the liquid from the first zone to the second zone, through the first portion and a second portion of the seating.

In accordance with another aspect of the present invention, the valve member comprises, disposed on the lateral wall, at least a first circumferential sealing element able to cooperate with the internal surface of the cylindrical body, and at least a second circumferential sealing element able to cooperate with the external surface of the internal cylinder.

The present invention also concerns a method of operation of the shock absorber device, in which a pressurized gas and a shock absorber liquid generate respective flows exiting from, or entering into, an internal cylinder, and in which a rod integral with a hermetically sealed piston slides axially in the internal cylinder and passes between a contracted position, in which it is disposed inside the cylindrical body, to a position in which it exits from a first end of the cylindrical body.

In accordance with another aspect of the present invention, the method comprises an extension step and a compression step in which the regulating means regulate the flow of the liquid respectively entering into, and exiting from, the internal cylinder in relation to the action of the piston.

In particular, in the extension step the rod passes from the contracted position to the extracted position with a first speed; and in the compression step the rod passes from the extracted position to the contracted position with a second speed, different from the first speed.

In accordance with another aspect of the present invention, in the compression step a calibrated hole of the regulating means, by means of a section narrowing, allows to make the liquid exit from the internal cylinder in a controlled manner, thus regulating the second speed, which is lower than the first speed.

In accordance with another aspect of the present invention, in the extension step, a closing element of a discharge valve of the regulating means, moving in a corresponding seating, passes between a closed position and an open position in relation to the condition of compression of the liquid in order to prevent and allow, respectively, the passage of the liquid into the internal cylinder, thus regulating the first speed.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a section view of a traction gas shock absorber device according to the present invention, in a first operating condition;
- fig. 2 is a section view of the shock absorber device of fig. 1 in a second operating condition;
- figs. 3 and 4 are a schematic representation of an operating sequence which shows the initial transition from the first operating condition to the second operating condition; and
- figs. 5 and 6 are a schematic representation of an operating sequence which shows the initial transition from the second operating condition to the first operating condition.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

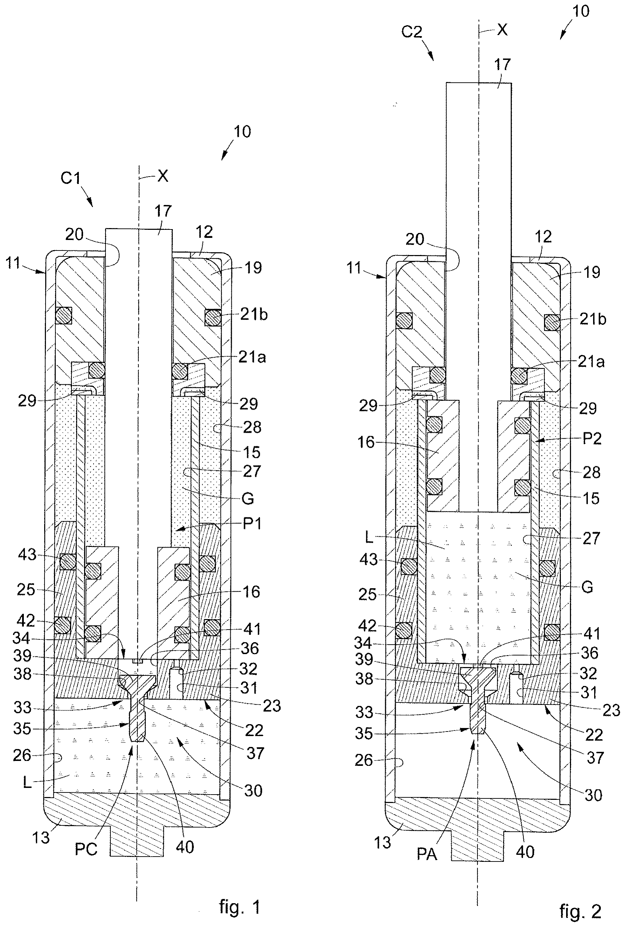

With reference to figs. 1 and 2, a gas shock absorber device 10 of the traction type according to the present invention is usable in closing mechanisms of a door, a frame, or a window.

The shock absorber device 10 comprises a cylindrical body 11 having a partly open first end 12 and a closed second end 13.

The cylindrical body 11 is provided with an internal cylinder 15 in which a hermetically sealed piston 16 is axially sliding, integral with a rod 17 which acts as an actuation member between a contracted position P1 and an extracted position P2. The piston 16, together with the rod 17, is sliding along a central axis X of symmetry of the cylindrical body 11.

The internal cylinder 15 has a smaller diameter than the cylindrical body 11.

Specifically, depending on the position of the piston 16 and of the rod 17, the shock absorber device 10 can selectively assume a first operating condition, or compression condition, C1, and a second operating condition, or extension condition, C2.

In the compression condition C1 (fig. 1) the rod 17, together with the piston 16, is in a contracted position P1, that is, disposed almost completely inside the cylindrical body 11.

In the extension condition C2 (fig. 2) the rod 17, together with the piston 16, is in the extracted position P2 and exits from the cylindrical body 11.

The cylindrical body 11 is normally filled with a pressurized gas G and with a shock absorbing liquid L which are able to generate respective flows exiting from, or entering into, the internal cylinder 15. In relation to the movement of the piston 16, the liquid L and the gas G, subjected to selective and alternating compressions, are able to determine the passage from the compression condition Cl to the extension condition C2, or vice versa, as will be described in detail below (figs. from 3 to 6).

The shock absorber device 10 (figs. 1 and 2) is provided with a hermetic bottom 19 configured to close the first end 12 in a sealed manner, allowing only the passage of the rod 17 by means of a passage hole 20. The sizes of the passage hole 20 are correlated to those of the rod 17.

For example, the hermetic bottom 19 can be provided with one or more sealing elements 21a associated with the passage hole 20 and cooperating with the rod 17 to maintain the hermetic seal, and with one or more sealing elements 21b cooperating with the internal surface of the cylindrical body 11.

According to preferred embodiments, the internal cylinder 15 is attached to the hermetic bottom 19 and is in communication with the passage hole 20 for the passage of the rod 17.

With the internal cylinder 15 there is associated a valve member 22 disposed on the opposite part with respect to the hermetic bottom 19 and configured to regulate the flow of the liquid L exiting from, or entering into, the internal cylinder 15 in relation to the action of the piston 16, thus also regulating the speed of the rod 17 during the passage from the contracted position P1 to the extracted position P2, or vice versa.

According to possible embodiments, the valve member 22 is disposed in such a way as to close and externally wrap a part of the internal cylinder 15 opposite the hermetic bottom 19.

The valve member 22 comprises a front wall 23 and a lateral wall 25, and defines inside the cylindrical body 11 a first zone 26 between the second end 13 and the front wall 23, a second zone 27 in the internal cylinder 15 and a third zone 28, external to the internal cylinder 15, which extends between the terminal surface of the lateral wall 25 and the hermetic bottom 19. Furthermore, the front wall 23 essentially determines an end-of-travel for the piston 16.

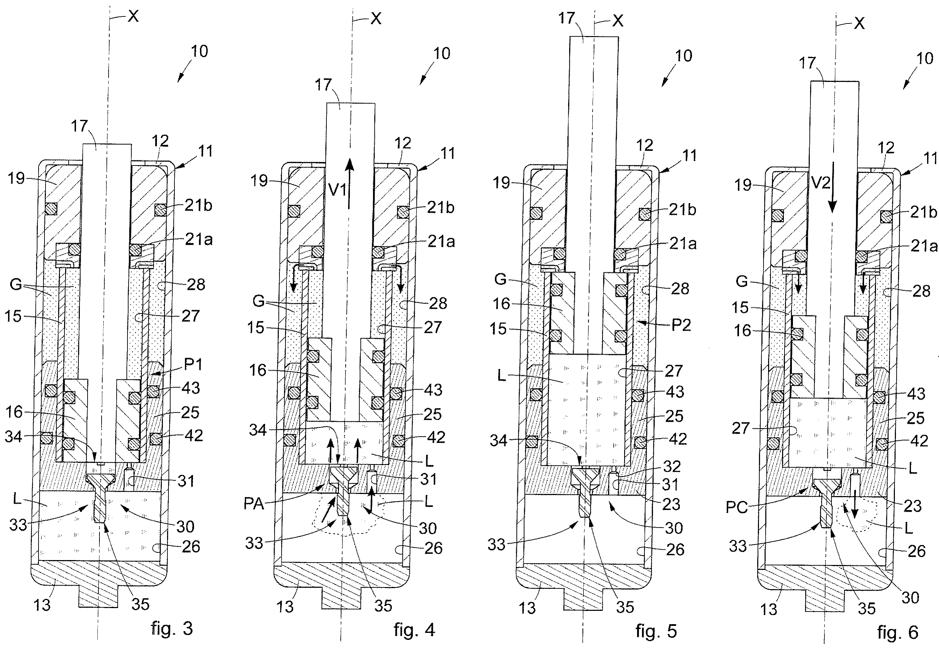

The valve member 22 comprises regulating means 30 configured to regulate the flow of the liquid L both entering into the internal cylinder 15, that is, toward the second zone 27, so that the rod 17, together with the piston 16, passes from the contracted position P1 to the extracted position P2 with a first speed V1 (figs. 3 and 4), and also exiting from the internal cylinder 15, that is, toward the first zone 26, so that the rod 17, together with the piston 16, passes from the extracted position P2 to the contracted position P1 with a second speed V2 (figs. 5 and 6), different from the first speed V1.

In particular, the first speed V1 is greater than the second speed V2. In other words, the passage from the extension condition C2 to the compression condition C1 occurs in a longer time than the passage from the compression condition C1 to the extension condition C2 (figs. from 3 to 6).

The first and the second zone 26, 27 (figs. 1 and 2) are in fluidic communication by means of the regulating means 30 that allow the passage of the liquid L. The second and the third zone 27, 28 are in fluidic communication by means of passages 29 present between the bottom of the internal cylinder 15 and the hermetic bottom 19, to allow the passage of the pressurized gas G.

When the rod 17, together with the piston 16, is in the contracted position P1, the pressurized gas G is in the second zone 27, between the bottom of the piston 16 and the hermetic bottom 19, and the liquid L is present only in the first zone 26. Conversely, when the rod 17, together with the piston 16, is in the extracted position P2, the liquid L is in the second zone 27, between the head of the piston 16 and the valve member 22, and the pressurized gas G is present only in the third zone 28. In this condition, in the first zone 26 there is a pressure substantially equal to atmospheric pressure.

According to some embodiments, the regulating means 30 comprise a calibrated hole 31 configured to allow the controlled exit of the liquid L from the second zone 27 to the first zone 26, when the latter is subjected to compression by the piston 16, that is, during the passage from the extracted position P2 to the contracted position P1.

The calibrated hole 31 is made on the front wall 23, for example in an eccentric position, to put the second zone 27 in fluidic communication with the first zone 26.

According to some embodiment, the calibrated hole 31 comprises a section narrowing 32 so as to have, close to the second zone 27, a smaller cross section than the one close to the first zone 26, thus slowing down the exit of the liquid L subjected to compression. This results in a braking action on the piston 16 and on the rod 17, when they pass from the extracted position P2 to the contracted position P1 with the second speed V2 (figs. 5 and 6).

The calibrated hole 31 (figs. 1 and 2) has a circular cross section and the section narrowing 32 has a truncated conical shape.

The size of the calibrated hole 31 and the size of the narrowing 32 determine the exit speed of the liquid L from the internal cylinder 15 and, consequently, also the second speed V2.

According to some embodiments, the regulating means 30 comprise a discharge valve 33 having a seating 34 in which a closing element 35 is disposed with clearance mobile between a closed position PC (fig. 1) and an open position PA (fig. 2) in relation to the condition of compression of the liquid L, in order to prevent and allow, respectively, the passage of the liquid L between the first and the second zone 26, 27, thus regulating the first speed V1 of the piston 16 and of the rod 17.

The discharge valve 33 (figs. 1 and 2) is made on the front wall 23, for example in a central position, and it also puts the first and the second zone 26, 27 in fluidic communication.

The seating 34 comprises a first portion 36 facing the first zone 26 and a second portion 37 facing the second zone 27, wherein the first portion 36 has a smaller cross section than the second portion 37. Between the first portion 36 and the second portion 37 there is a connection shoulder 38.

According to some embodiments, the first and second portion 36, 37 have a circular cross section and the shoulder 38 has a truncated conical shape.

The sizes of the seating 34 are much larger than the calibrated hole 31, for example its cross sections can be even 4 or 5 times larger than those of the calibrated hole 31.

The closing element 35 has a shape that traces, at least in part, that of the seating 34 to guarantee a hermetic closure when the latter is in the closed position PC.

In accordance with some embodiments, the closing element 35 has a closing portion 39 configured to contact the shoulder 38 of the seating 34 and block the outgoing liquid L when the closing element 35 is in the closed position PC (fig. 1), and a centering portion 40 configured to cooperate with the second portion 37 of the seating 34 in order to keep the closing element 35 in a centered position with respect to the seating 34, when it is in the open position PA (fig. 2).

The size of the closing portion 39 and of the centering portion 40 is such as to allow, when the closing element 35 is in the open position PA, the controlled passage of the liquid L through the first portion 36 and the second portion 37 of the seating 34.

According to some embodiments, in the second portion 37 of the seating 34, close to the second zone 27, support elements 41 can be present to correctly keep the closing element 35 in the seating 34 when it is in the open position PA.

The support elements 41 can be conformed as thin plates attached radially and on opposite parts in the second portion 37, so as to contact the bottom surface of the closing element 35 only in certain zones, while allowing the liquid L to flow in the remaining open passage zones of the second portion 37.

The valve member 22 comprises, disposed on its lateral wall 25, at least a first circumferential sealing element 42, able to cooperate with the internal surface of the cylindrical body 11, and at least a second circumferential sealing element 43, able to cooperate with the external surface of the internal cylinder 15.

The first and second sealing element 42, 43 have the function of separating the first, the second and the third zone 26, 27, 28 in a sealed manner, that is, hermetically.

The method of operation of the shock absorber device 10 comprises the following steps.

In an initial preparation step, the cylindrical body 11 is suitably filled with the pressurized gas G and the liquid L.

In a movement step, the gas G and the liquid L generate respective flows exiting from, or entering into, the internal cylinder 15, and the rod 17, together with the piston 16, flows axially in the internal cylinder 15 passing from the contracted position P1 to the extracted position P2, and vice versa.

The movement step comprises an extension step (figs. 3 and 4) in which regulating means 30 regulate the flow of the liquid L entering into the internal cylinder 15 in relation to the action of the piston 16, so that the rod 17 passes from the contracted position P1 to the extracted position P2 with the first speed V1.

The movement step also comprises a compression step (figs. 5 and 6) in which regulating means 30 regulate the flow of the liquid L exiting from the internal cylinder 15 in relation to the action of the piston 16, so that the rod 17 passes from the extracted position P2 to the contracted position P1 with the second speed V2.

In particular, in the extension step (fig. 3 and 4), the calibrated hole 31, by means of the narrowing 32, allows the liquid L to exit from the internal cylinder 15, that is, from the second zone 27 toward the first zone 26, in a controlled manner, thus regulating the second speed V2.

In the extension step, the closing element 35, moving in the seating 34, passes between a closed position PC and the open position PA in relation to the condition of compression of the liquid L, in order to prevent and, respectively, allow the passage of the latter in the internal cylinder 15, thus regulating the first speed V1.

In general, during the extension step (figs. 3 and 4), the closing element 35 passes from the closed position PC to the open position PA in relation to the fact that the piston 16, moving toward the extracted position P2, progressively creates an empty space in the second zone 27, and the liquid L, being compressed in the first zone 26, expands toward the second zone 27 passing through the calibrated hole 31 and consequently moving the closing element 35.

Conversely, during the compression step (figs. 5 and 6), the closing element 35 passes from the open position PA to the closed position PC by means of the action of the liquid L, which is compressed by the piston 16 in the second zone 27. In this case, the compressed liquid L moves the closing element 35 toward the first zone 26 and takes the closing portion 39 against the shoulder 38.

Both the first speed V1 as well as the second speed V2 are regulated by regulating the flow rate of the liquid L, in the manner explained above.

It is clear that modifications and/or additions of parts may be made to the shock absorber device 10 as described heretofore, without departing from the field and scope of the present invention, as defined by the claims.

It is also clear that, although the present invention has been described with reference to some specific examples, a person of skill in the art will be able to achieve other equivalent forms of shock absorber devices, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Gas shock absorber device (10) of the traction type comprising a cylindrical body (11) provided with an internal cylinder (15) in which a hermetically sealed piston (16) is axially sliding, integral with a rod (17) which acts as an actuation member between a contracted position (P1), in which it is disposed inside said cylindrical body (11), and an extracted position (P2), in which it exits from said cylindrical body (11) where there are present a pressurized gas (G) and a shock absorber liquid (L) which are able to generate respective flows exiting from, or entering into, said internal cylinder (15), **characterized in that** a valve member (22), associated with and configured to close said internal cylinder (15), comprising means (30) for regulating the flow of said liquid (L) exiting from, or entering into, said internal cylinder (15) so that said rod (17) passes from said contracted position (P1) to said extracted position (P2) with a first speed (V1), and from said extracted position (P2) to said contracted position (P1) with a second speed (V2), different from said first speed (V1).

2. Shock absorber device (10) as in claim 1, **characterized in that** said valve member (22) comprises a front wall (23) and a lateral wall (25) to close and externally wrap a part of said internal cylinder (15), defining in said cylindrical body (11) a first zone (26) between a second end (13) of the latter and said front wall (23), a second zone (27) in said internal cylinder (15), and a third zone (28), external to said internal cylinder (15), which extends between the terminal surface of said lateral wall (25) and a hermetic bottom (19) disposed on the opposite part with respect to said valve member (22), wherein said first and second zone (26, 27) are in fluidic communication by means of said regulating means (30).

3. Shock absorber device (10) as in any claim hereinbefore, **characterized in that** said regulating means (30) comprise a calibrated hole (31) configured to allow the controlled exit of said liquid (L) from said internal cylinder (15) when said liquid (L) is subjected to compression by said piston (16) during the passage from said extracted position (P2) to said contracted position (P1), thus regulating said second speed (V2).

4. Shock absorber device (10) as in claim 3 when it depends on claim 2, **characterized in that** said calibrated hole (31) is made on said front wall (23) and comprises a section narrowing (32) so as to have a cross section close to said second zone (27) that is smaller than the cross section that is close to said first zone (26), thus slowing down the exit of said liquid (L) subjected to compression by said piston (16).

5. Shock absorber device (10) as in any claim hereinbefore, **characterized in that** said regulating means (30) comprise a discharge valve (33) having a seating (34) in which a closing element (35) is disposed with clearance mobile between a closed position (PC) and an open position (PA) in relation to the condition of compression of said liquid (L), in order to prevent and allow, respectively, the passage of said liquid (L) into said internal cylinder (15), thus regulating said first speed (V1).

6. Shock absorber device (10) as in claim 5 when it depends on claim 3, **characterized in that** said calibrated hole (31) defines a passage section smaller than the passage section of said seating (34), so that said second speed (V2) is lower than said first speed (V1).

7. Shock absorber device (10) as in claim 5 when it depends on claim 2, **characterized in that** said closing element (35) comprises a closing portion (39) which, when said closing element (35) is in said closed position (PC), is configured to contact a shoulder (38) of said seating (34) in order to block said liquid (L) exiting from said second zone (27), and a centering portion (40) configured to cooperate with a first portion (36) of said seating (34) in order to keep said closing element (35) in a centered position with respect to said seating (34) when it is in the open position (PA).

8. Shock absorber device (10) as in claim 7, **characterized in that** said closing portion (39) and said centering portion (40) have a size such as to allow, when said closing element (35) is in said open position (PA), the controlled passage of said liquid (L), from said first zone (26), through said first portion (36) and a second portion (37) of said seating (34).

9. Method of operation of a shock absorber device (10) having a cylindrical body (11), in which a pressurized gas (G) and a shock absorber liquid (L) generate respective flows exiting from, or entering into, an internal cylinder (15), and in which a rod (17) integral with a hermetically sealed piston (16) slides axially in said internal cylinder (15) and passes between a contracted position (P1), in which it is disposed inside said cylindrical body (11), to a position (P2) in which it exits from a first end (12) of said cylindrical body (11), **characterized in that** it comprises an extension step and a compression step in which regulating means (30) regulate the flow of said liquid (L) respectively entering into, and exiting from, said internal cylinder (15) in relation to the action of said piston (16), so that said rod (17) passes from said contracted position (P1) to said extracted position (P2) with a first speed (V1), and from said extracted position (P2) to said contracted position (P1) with a second speed (V2), different from said first speed (V1).

10. Method as in claim 9, **characterized in that** in said compression step, a calibrated hole (31) of said regulating means (30), by means of a section narrowing (32), allows to make said liquid (L) exit from said internal cylinder (15) in a controlled manner, thus regulating said second speed (V2), which is lower than said first speed (V1).

11. Method as in claim 9 or 10, **characterized in that** in said extension step, a closing element (35) of a discharge valve (33) of said regulating means (30), moving in a corresponding seating (34), passes between a closed position (PC) and an open position (PA) in relation to the condition of compression of said liquid (L) in order to prevent and allow, respectively, the passage of said liquid (L) into said internal cylinder (15), thus regulating said first speed (V1).
